# EUROPEAN PATENT SPECIFICATION

(11) **EP 3 117 661 B1**
(45) Date of publication and mention of the grant of the patent: **20.02.2019**
(21) Application number: 14885611.5
(22) Date of filing: 14.03.2014
(51) Int. Cl.: H04W 36/00, H04W 74/08

(54) **METHOD AND APPARATUS FOR A HANDOVER USING DEDICATED RANDOM ACCESS RESOURCE**
VERFAHREN UND VORRICHTUNG ZUM WEITERREICHEN MITTELS DEDIZIERTER DIREKTZUGRIFFSRESSOURCEN
PROCÉDÉ ET APPAREIL POUR UN TRANSFERT INTERCELLULAIRE À L'AIDE D'UNE RESSOURCE D'ACCÈS ALÉATOIRE DÉDIÉE

(43) Date of publication of application: 18.01.2017
(73) Proprietor: Telefonaktiebolaget LM Ericsson (publ), 164 83 Stockholm (SE)
(72) Inventor: LI, Feng, Beijing 100102 (CN); ZHU, Huaisong, Beijing 100012 (CN); QIANG, Yongquan, Beijing 100078 (CN)
(74) Representative: Zacco Sweden AB
(86) International application number: PCT/CN2014/073452
(87) International publication number: WO 2015/135203

(56) References cited:
- CN-A- 101 765 157
- CN-A- 102 396 280
- US-A1- 2007 293 224
- US-A1- 2011 261 752
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 12)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V12.0.0, 10 January 2014 (2014-01-10), pages 1-208, XP050729408, [retrieved on 2014-01-10]
- "3rd Generation Partnership Project; Technical Specification Group Radio Access Network; Evolved Universal Terrestrial Radio Access (E-UTRA); Physical channels and modulation (Release 12)", 3GPP STANDARD; 3GPP TS 36.211, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V12.0.0, 14 December 2013 (2013-12-14), pages 1-120, XP050729027, [retrieved on 2013-12-14]

## Description

### TECHNICAL FIELD

Embodiments of the present disclosure generally relate to communication systems, and more particularly to a method, an apparatus, a user equipment, a base station, and a computer readable storage medium for a handover using dedicated random access resource.

### BACKGROUND

This section introduces aspects that may facilitate a better understanding of the disclosure(s). Accordingly, the statements of this section are to be read in this light and are not to be understood as admissions about what is in the prior art or what is not in the prior art.

In Long-Term Evolution (LTE) system, the Random Access (RA) process is a very normal process, which helps a user equipment (UE) to start connection with evolved Node B (eNB) side. The preambles are the key factor for this process. A UE will choose or be allocated a specific preamble to do random access process. The uplink (UL) physical channel "physical random access channel (PRACH)" is used to carry Message 1 (MSG1), i.e., preamble sequences for random access. According to 3GPP TS 36.211 V11.2.0 (2013-02), "3rd Generation Partnership Project; Technical Specification Group Radio Access Network; Evolved Universal Terrestrial Radio Access (E-UTRA); Physical Channels and Modulation (Release 11)", chapter 5.7.2 "Preamble sequence generation", the random access preambles are generated from Zadoff-Chu sequences with zero correlation zone, generated from one or several root Zadoff-Chu sequences. The network configures the set of preambles sequences the user equipment (UE) is allowed to use.

There are 64 preambles available in each cell. The set of 64 preamble sequences in a cell is found by including first, in the order of increasing cyclic shift, all the available cyclic shifts of a root Zadoff-Chu sequence with the logical index RACH_ROOT_SEQUENCE, where RACH_ROOT_SEQUENCE is broadcasted as part of the System Information. The logic root sequence order is cyclic: the logic index is consecutive from 0 to 837. The relation between a logic root sequence index and a physical root sequence index u is given in 3GPP TS 36.211, and each physical root sequence index corresponds to a logical index RACH_ROOT_SEQUENCE.

For each cell, these 64 preambles need to be divided into three parts: 1. Dedicated preambles for contention free random access (CFRA); 2. Group A for contention based random access (CBRA) for UEs with less UL data which needs to be transferred; and 3. Group B for CBRA for UEs with larger UL data which needs to be transferred.

In the information element (IE) *RACH-ConfigCommon* which is used to specify the generic random access parameters, *numberOfRA-Preambles* defines the number of preambles which are used for UE to randomly select for CBRA. Then, the number of dedicated preambles which are used for CFRA is implicitly given by 64 subtracted by *numberOfRA-Preambles.* The preambles for CBRA are again divided into Group A and Group B, where the Group A is used for random access when a UE with less UL data needs to transmit, and the Group B is used when a UE with larger UL data needs to transmit.

Each group has its own specific usage, especially for dedicated preambles, which is very useful to guarantee the handover (HO) successful. CFRA could be used for handover (HO) scenarios. This could increase the HO success rate and decrease the HO latency, because under CFRA, the UE in the HO could be allocated a dedicated preamble, which could be used for doing the random access in the target cell.

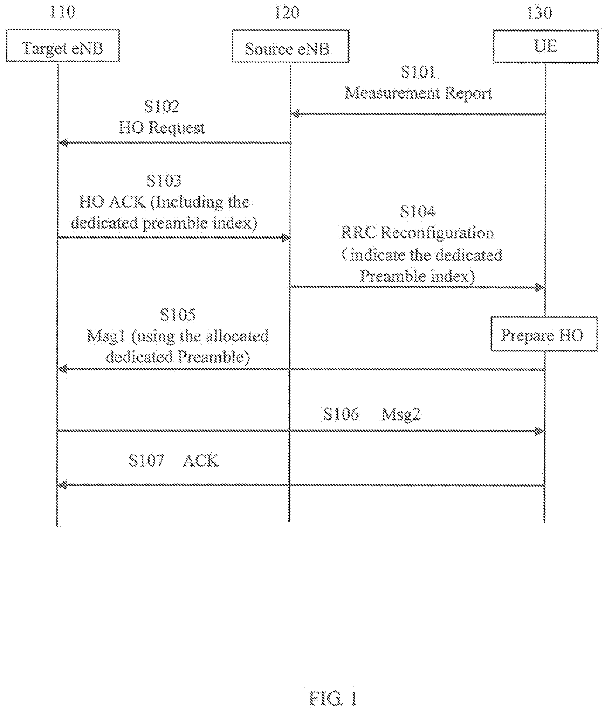

FIG. 1 illustrates an exemplary handover process for a UE from a source eNB to a target eNB in the prior art. As shown, FIG. 1 shows the signal flow between a UE 130, a source eNB 120, and a target eNB 110.

At step S101, the UE 130 sends a measurement report to the source eNB 120. The sending of the measurement report can be triggered by some event, for example event A3 as defined in LTE. Event A3 is that neighbor cell becomes better than an offset relative to the serving cell.

Based on the received measurement report, at step S102, the source eNB 120 will issue a HANDOVER REQUEST message to the target eNB passing necessary information to prepare the handover at the target side.

Then, after receiving the HANDOVER REQUEST message from the source eNB 120, the target eNB 110 will prepare for the incoming handover and configure needed resource in advance, for example, reserving a dedicated random access channel (RACH) preamble. After completing the resource configuration procedure, at step S103, the target eNB 110 will send a HANDOVER REQUEST ACKNOELEDGE (ACK) message to the source eNB 120. This message includes a transparent container to be sent to the UE as a radio resource control (RRC) message i.e., *RRCConnectionReconfiguration* message, to perform the handover. The container may include a dedicated RACH preamble, and possibly some other parameters i.e., access parameters, some contents included in system information block (SIB), etc.

At Step S104, the source eNB 120 forwards the RRC message to the UE 130.

After receiving the *RRCConnectionReconfiguration* message including the *mobilityControlInformation,* the UE performs synchronization to target eNB and accesses the target cell via RACH, following a contention-free procedure if a dedicated RACH preamble was indicated in the *mobilityControlInformation.* At step S105, the UE transmits Message 1 (MSG1) with the allocated dedicated RACH preamble over an uplink PRACH.

At step S106, the target eNB 110 responds with Message 2 (MSG2) to the UE 130. The MSG2 may include UL allocation and timing advance.

When the UE has successfully accessed the target cell, at step S107, the UE sends the *RRCConnectionReconfigurationComplete* message to confirm the handover to the target eNB to indicate that the handover procedure is completed for the UE.

From the above process, it can be seen that once the target cell receiving the HO request from the source cell, it will allocate one dedicated preamble for the UE in this handover, where the dedicated preamble is one of the configured dedicated preambles from the target cell. The source cell will inform the UE via the RRC Reconfiguration message including the allocated dedicated preamble index. All these information are included in the IE *PRACH-Config* as shown blow. The IE *PRACH-Config* is used to specify the PRACH configuration in the mobility control information.

```
 PRACH-Config ::= SEQUENCE {
    rootSequenceIndex INTEGER (0 .. 837),
    prach-ConfigInfo PRACH-Configlnfo OPTIONAL -- Need ON
}
    PRACH-Configlnfo ::= SEQUENCE {
    prach-ConfigIndex INTEGER (0 .. 63),
    highSpeedFlag BOOLEAN,
    zeroCorrelationZoneConfig INTEGER (0 .. 15),
    prach-FreqOffset INTEGER (0 .. 94)
    
} 
```

The rootSequenceIndex indicates the RACH_ROOT_SEQUENCE used in the target cell, and PRACH-Configlnfo is used to identify the specific dedicated preamble allocated to this UE under CFRA.

Once obtaining all these information, the UE could do the CFRA in the target cell.

Since the RACH configuration is broadcasted by system information block (SIB) message, so the divided number of preambles configuration between CFRA and CBRA is semi-statically decided. Further, the total number of preambles allocated for one cell is only 64, and then it will be tradeoff between the number of preambles allocated for CFRA and the number of preambles allocated for CBRA. However, in many scenarios, it is very hard to predict how many handovers will occur during a certain time period.

Further, in some scenarios such as high speed railway scenarios, there will be lots of HO requests occurring in a very short time, because there will be lots of UEs in one train. Under such scenario, the number of dedicated RACH preambles required will be increased a lot.

Thus it will make the 64 preambles very limited when lots of dedicated preambles for CFRA need to be configured.

In a US patent application publication US2011/0013542A1, a method and a base station for allocating dedicated random access resource are provided. The proposed technical solution can allocate the same dedicated random access preamble for different RACH channels to different UEs, and can improve the utilization efficiency of the dedicated random access preamble.

In an international patent publication WO2012/116709A1, methods and apparatuses for a handover using reserved temporal resources are provided. The temporal resources may be random access channel resources.

The above mentioned prior art uses time domain resources (time division multiplexing) and/or frequency domain resources (frequency division multiplexing) to improve the utilization efficiency of the dedicated random access preamble. However, such solutions are still not enough for some critical situations such as high speed railway scenarios.

US2011/261752 describes a method of allocating and choosing signatures for random access.

The 3GPP standard in 3GPP TS 36.300 describes a handover procedure using random access.

### SUMMARY

Therefore, it would be desirable in the art to provide a new solution for a handover using dedicated random access resources.

In a first aspect of the disclosure, a method implemented in a target base station, BS, of a cellular radio system during a handover of a user equipment, UE, from a source BS to the target BS is provided. The method comprises: providing a first set of preconfigured Random Access Channel, RACH, preambles for random access; providing a second set comprising at least one dedicated RACH preamble, wherein said dedicated RACH preamble is different from any RACH preamble preconfigured in said target BS at least in terms of a root sequence in said RACH configuration; receiving a handover request from the source BS; allocating a dedicated random access channel, RACH, preamble and a RACH configuration associated with the dedicated RACH preamble, to the UE for accessing the target BS; transmitting a handover response including information of the dedicated RACH preamble and the RACH configuration to the source BS; starting a timer after transmitting said handover response; and stopping said detecting of the dedicated RACH preamble after confirming that said UE is informed that said dedicated RACH preamble has been detected by the target BS, or in response to expiry of said timer.

In some embodiments, the dedicated RACH preamble may be further different from any RACH preamble preconfigured in the target BS in terms of one or more of the following: time resource for transmitting the dedicated RACH preamble; and frequency resource for transmitting the dedicated RACH preamble.

In some further embodiments, the method may further comprise detecting the dedicated RACH preamble in time resource and frequency resource for transmitting the dedicated RACH preamble, after transmitting the handover response.

In some embodiments, allocating the dedicated RACH preamble and the RACH configuration may comprise: configuring one or more of the root sequence, the time resource and the frequency resource at least partly based on cross-correlation property of preambles, to avoid intra-cell interference with the RACH preambles preconfigured in the target base station.

In a second aspect of the disclosure, a base station, BS, of a cellular radio system, adapted to act as a target BS during a handover of a user equipment, UE, from a source BS to the target BS is provided. The BS comprises: a processor operative to provide a first set of preconfigured Random Access Channel, RACH, preambles for random access and to provide a second set comprising at least one dedicated RACH preamble, wherein said dedicated RACH preamble is different from any RACH preamble preconfigured in said target BS at least in terms of a root sequence in said RACH configuration; a receiving unit, configured to receive a handover request from the source BS; an allocating unit, configured to allocate a dedicated random access channel, RACH, preamble and a RACH configuration associated with the dedicated RACH preamble, to the UE for accessing the BS; and a transmitting unit, configured to transmit a handover response including information of the dedicated RACH preamble and the RACH configuration to the source BS; a timing unit, configured to start a timer after transmitting said handover response; and a control unit, configured to stop said detecting of the dedicated RACH preamble after confirming that said UE is informed that said dedicated RACH preamble has been detected by the target BS, or in response to expiry of said timer..

In a third aspect, a method implemented in a user equipment, UE, of a cellular radio system during a handover of the UE from a source base station, BS, to a target BS is provided. The method comprises: receiving a connection reconfiguration message forwarded by the source BS from the target BS. The message indicates a dedicated random access channel, RACH, preamble, the dedicated preamble being part of a second set of preambles, wherein the dedicated RACH preamble is different from any RACH preamble in a first set of preconfigured preambles for the target Base Station at least in terms of a root sequence in said RACH configuration, the dedicated preamble is valid for a period until an expiry of a timer at the target Base Station, and a RACH configuration associated with the dedicated RACH preamble for accessing the target BS. The method further comprises: generating the dedicated RACH preamble based on the root sequence; and transmitting the dedicated RACH preamble according to the RACH configuration.

In some embodiments, the method may further comprise: receiving a system information block, SIB, message from the target BS after handing over to the target BS; and reconfiguring the RACH configuration according to the SIB message.

In a fourth aspect, a user equipment, UE, of a cellular radio system is provided. The UE is handed over from a source base station, BS, to a target BS. The UE comprises: a receiving unit, configured to receive a connection reconfiguration message forwarded by the source BS from the target BS. The message indicates a dedicated random access channel, RACH, preamble the dedicated preamble being part of a second set of preambles, wherein the dedicated RACH preamble is different from any RACH preamble in a first set of preconfigured preambles for the target Base Station at least in terms of a root sequence in said RACH configuration, the dedicated preamble is valid for a period until an expiry of a timer at the target Base Station, and a RACH configuration associated with the dedicated RACH preamble for accessing the target BS. The UE further comprises a generating unit, configured to generate the dedicated RACH preamble based on the root sequence; and a transmitting unit, configured to transmit the dedicated RACH preamble according to the RACH configuration.

Particular embodiments of the subject matter described in this specification can be implemented so as to realize one or more of the following advantages.

With particular embodiments of the techniques described in this specification, by allocating other preambles than the 64 preambles preconfigured in the target cell, almost endless preambles may be used as dedicated preambles for handover. Thus, the target cell could configure enough CBRA preambles without taking much consideration of preserving CFRA preambles for handover. Moreover, the proposed solutions will not impact any existing 3GPP standard.

Other features and advantages of the embodiments of the present disclosure will also be understood from the following description of specific embodiments when read in conjunction with the accompanying drawings, which illustrate, by way of example, the principles of embodiments of the present disclosure.

### BRIEF DESCRIPTION OF THE DRAWINGS

The above and other aspects, features, and benefits of various embodiments of the disclosure will become more fully apparent, by way of example, from the following detailed description and the accompanying drawings, in which:
FIG. 1 illustrates an exemplary handover process for a UE from a source eNB to a target eNB in the prior art;
FIG. 2 illustrates an exemplary process flow of a method in a target base station for a handover using dedicated random access resources according to embodiments of the present disclosure;
FIG. 3 illustrates an exemplary handover process for a UE from a source eNB to a target eNB according to embodiments of the present disclosure;
FIG. 4 illustrates an exemplary handover process for a UE from a source eNB to a target eNB according to embodiments of the present disclosure;
FIG. 5 illustrates an exemplary process flow of a method in a UE for a handover using dedicated random access resources according to embodiments of the present disclosure;
FIG. 6 is a schematic block diagram of a base station that may be configured to practice exemplary embodiments according to some embodiments of the present disclosure;
FIG. 7 is a schematic block diagram of a UE that may be configured to practice exemplary embodiments according to some embodiments of the present disclosure; and
FIG. 8 illustrates a simplified block diagram of an entity that is suitable for use in practicing exemplary embodiments of the present disclosure.

Like reference numbers and designations in the various drawings indicate like elements.

### DETAILED DESCRIPTION

Hereinafter, the principle and spirit of the present disclosure will be described with reference to the illustrative embodiments. It should be understood, all these embodiments computer program instructions are stored. The computer readable storage medium can be, for example, an optical compact disk or an electronic memory device like a RAM (random access memory) or a ROM (read only memory).

While it is described below in the context of a LTE type cellular network for illustrative purposes and since it happens to be well suited to that context, those skilled in the art will recognize that the disclosure disclosed herein can also be applied to various other types of cellular networks.

In the following description, a base station (BS) is an entity for allocating resources to a terminal and can be any of an enhanced Node B (eNB), a Node B, a BS, a radio access unit, a base station controller, and a node on a network. Further, in the context of this disclosure, the cell or sector can be used interchangeable with a BS. The terminal can be a user equipment (UE), a mobile station (MS), a cellular phone, a smart phone, a computer, or a multimedia system equipped with communication function. Please be noted that, the terms "user terminal" and "user equipment" can be used interchangeable hereinafter.

Herein, "a random access resource" refers to a resource block defined in the time domain and the frequency domain and used for transmitting random access signals, which may also be referred to as a random access opportunity, a PRACH resource, a PRACH opportunity, or a PRACH instance. In LTE systems, in frequency domain, one random access resource usually corresponds to 6 consecutive physical resource blocks (PRBs) and in time domain it usually corresponds to a "PRACH window". Here, the duration of a "PRACH window" usually consists of a length *T_{CP}* of cyclic prefix, a length *T_{SEQ}* of a sequence part, and a guard period *GP,* and depends on preamble format.

As mentioned in the Background section, in critical scenarios such as high speed railway scenarios, there will be lots of HO requests happened in a very short time and a lot of dedicated RACH preambles need to be allocated for UEs in the handover. Below is some rough estimation how many dedicated RACH preambles are needed to be preserved.

As illustrated in FIG. 1, the target eNB 110 needs to allocate one dedicated RACH preamble once it receives a handover request at step S102, and then it should pick one unused dedicated preamble, and mark this picked one as used dedicated preamble. Till the target eNB 110 sends out Msg2 at step S106 and get the ACK feedback from UE side at step S107, the target eNB 110 could release the preserved dedicated preamble and make it available for the next UE.

Based on field test under only one UE case, the gap between the target cell sending the HO ACK to source cell and the source cell sending the RRC message to the UE is like 30ms, and the gap between the UE receiving the RRC message from the source cell and sending out the first preamble to the target cell is usually 20ms∼30ms. Then according to 3GPP, the minimum gap between the target cell receiving the first preamble and getting feedback to Msg2 from the UE should be 14ms. So, it can be seen that one dedicated preamble should be reserved in the target cell at least for 74ms. Considering the process consuming time at the eNB side, it is assumed that at least 100ms needs to be kept for one dedicated preamble. 100ms is 10 times of a RACH opportunity. If supposing that the density of HO in 10ms is 2, then at least 20 preambles need to be preserved for CFRA, and 44 preambles are left for CBRA.

Still, it is noted that the above estimation is only under an optimized situation, where there is no any failed reception, no any postpone reaction in eNB side due to high load, which is very common when eNB side needs to handle lots of HO request during a short time. So, considering that the RA Response window is set to 10ms, and with at least one time failed reception, then this will let the preserved time up to 150ms. So even still only 2 times of HO request in 10ms, 30 preambles need to be preserved for CFRA, and only 34 preambles are left for CBRA. Further, in high railway scenarios, when there is 3∼4 times of HO request in 10ms, 45∼60 preambles need to be preserved for CFRA, and then there will even no preambles left for CBRA.

So it can be seen that the 64 preambles will not be enough for handling such critical situations.

Based on the analysis in the Background section, it can be seen that the root cause is that the dedicated preambles used for HO need sharing with the 64 preambles allocated to the target cell, which will make the number of preambles in the target cell not enough.

In order to solve the above problem, embodiments of the present disclosure will allocate the UEs in handover with other preambles than the 64 preambles preconfigured in the target cell. Specifically, during the handover process illustrated in FIG. 1, the *RRCConnectionReconfiguration* message as generated by the target eNB and sent in step S103, will not indicate the true RACH configuration in the target cell as in the prior art, but inform a different fake RACH configuration at least with a different root sequence. During the whole HO procedure, the target cell will not only detect its own original 64 preambles but also keep detecting the new allocated specific preamble allocated to the UE in HO until the UE is successfully done the CFRA in the target cell or a predefined time period has expired.

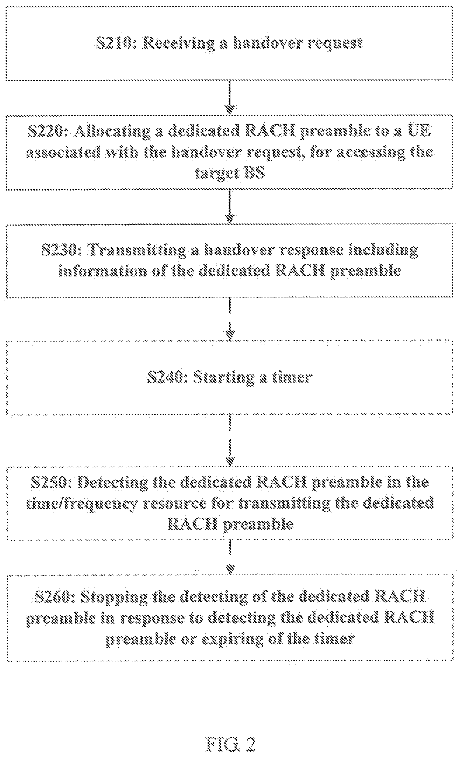

FIG. 2 illustrates an exemplary process flow of a method in a target base station for a handover using dedicated random access resources according to embodiments of the present disclosure. Following embodiments of the present disclosure will be described with reference to the process flow of FIG. 2 in combination with the signal flow in FIG. 1.

As shown in FIG. 2, at step S210, the target BS receives a handover request from a source BS of a UE to be handed over. This handover request will pass necessary information for the target BS to prepare the handover.

Then, at step S220, after receiving the handover request from the source BS, the target BS will allocate a dedicated RACH preamble and a RACH configuration associated with the dedicated RACH preamble, to the UE for accessing the target BS. The dedicated RACH preamble is different from any RACH preamble preconfigured in the target BS at least in terms of a root sequence in the RACH configuration.

Because other preambles than the 64 preambles preconfigured in the target cell will be used for the handover according to the embodiments herein, for the semi-static RACH configuration which needs broadcasting through SIB message, there is no need to consider the tradeoff between CFRA and CBRA. For the CFRA parts, it is only needed to consider how many CFRA preambles one cell need to be preserved for PDCCH order, which should be a very small value and maybe just 4 or 8 will be enough. For example, according to embodiments herein, the semi-static RACH configuration in the target cell could be as blow.

```
 RACH-ConfigCommon:: = {
                preambleInfo {
                numberOfRA-Preambles n60
...
                }
}
                PRACH-ConfigSIB :: = {
                rootSequenceIndex 123
                prach-ConfigInfo PRACH-ConfigInfo
}
                PRACH-ConfigInfo :: = {
                prach-ConfigIndex 3
                highSpeedFlag false
                zeroCorrelationZoneConfig 0
                prach-FreqOffset 2
}
```

From the RACH-ConfigCommon IE which is used to specify the generic random access parameters, it can be seen that this target cell has configured 60 preambles for CBRA and 4 preambles for CRFA. Further, the root sequence for generating these 64 preambles is indicated by rootSequenceIndex, which is 123 in this example.

When this target cell receives the HO request from the source cell, the target cell should allocate a dedicated preamble configured with at least a different root sequence compared with its own preconfigured preambles. In some embodiments, the configuring of the root sequence can be at least partly based on cross-correlation property of preambles generated from different root sequences, so as to avoid intra-cell interference with the RACH preambles preconfigured in the target BS. For example, the logic root sequence index of the newly configured root sequence can be selected according to the mapping table of Logical root sequence number and physical root sequence number as specified in 3GPP TS 36.211 V11.2.0 (2013-02).

Optionally, to further reduce the intra-cell interference in the target cell, the allocated dedicated RACH preamble for the UE in handover may be further different from any RACH preamble preconfigured in the target BS in terms of one or more of the following: time resource for transmitting the dedicated RACH preamble and frequency for transmitting the dedicated RACH preamble. It should be noticed that, if the target BS allocated a newly configured time/frequency resource for the PRACH, during the detection of this dedicated preamble, the target eNB should avoid scheduling any physical uplink shared channel (PUSCH) in the same time/frequency resource which the dedicated preamble will occupy.

In an exemplary embodiment, the newly configured RACH configuration may be as blow.

```
 PRACH-Config :: = {
                rootSequenceIndex 400
                prach-ConfigInfo PRACH-ConfigInfo
}
                PRACH-ConfigInfo :: = {
                prach-ConfigIndex 3
                highSpeedFlag false
                zeroCorrelationZoneConfig 0
                prach-FreqOffset 8
}
```

As compared with the preconfigured RACH configuration in the target BS, in this newly configured RACH configuration, the target BS allocates the UE in handover with different RACH_ROOT_SEQUENCE of 400 instead of the original 123. Thus, according to 3GPP TS 36.211, the 64 preambles generated by this root sequence are totally different from the original 64 preambles preconfigured in the target BS. Further, the prach-FreqOffset in the newly configured RACH configuration is set to 8 instead of the original 2, and then the UE in handover will transmit the allocated dedicated RACH preamble at a physical resource block (PRB) indexed from 8 to 13 instead of the original indexes 2-7. Moreover, if the dedicated RACH preamble is wanted to be transmitted in another time resource, it just needs to set prach-ConfigIndex to another value instead of 3, for example, 4 or 5.

In addition, the target BS will allocate a dedicated RACH preamble with the above RACH configuration to the UE in the handover. Under the conventional solution, only the preambles configures for CFRA could be chosen. In the above example, there are only 4 preambles out of 64 which are available for choosing according to the conventional solution. However, according to embodiments herein, since a new root sequence is configured, all the new 64 preambles generated from the new root sequence could be selected for the dedicated preamble. For example, the dedicated RACH preamble could be set as blow.

```
 RACH-ConfigDedicated:: = {
                ra-PreambleIndex 30
                ra-PRACH-MaskIndex 0
                }
```

From the above IE, it can be seen that the UE will be informed to use ra-PreambleIndex 30, which in the target cell is actually allocated to CBRA. However, because a different root sequence is used and in the shown example also a different frequency resource is used for the preamble access, there will be no CBRA to conflict with this preamble.

Then, at step S230 in FIG. 2, the target BS will transmit a handover response including information of the dedicated RACH preamble and the RACH configuration to the source BS, and the source BS will forward it to the UE.

After sending the handover response, the target BS will detect the new allocated dedicated preamble in addition to the original 64 preambles.

Optionally, at step S240, the target BS can start a timer.

Then, at step S250, the target BS can detect the dedicated RACH preamble in time resource and frequency resource for transmitting the dedicated RACH preamble.

At step 260, the target BS can stop the detecting of the dedicated RACH preamble after confirming that the UE is informed that the dedicated RACH preamble has been detected by the target BS, or in response to expiry of the timer. That is, after the target BS sends out Msg2 (e.g., step S106 in FIG. 1) and get the ACK feedback from UE side (e.g., step S107 in FIG. 1), the target BS could release this allocated dedicated preamble and make it available for next UEs in handover. Alternatively, if the dedicated preamble is not detected till the expiry of the timer, which means HO failure, the target BS can also stop the detecting.

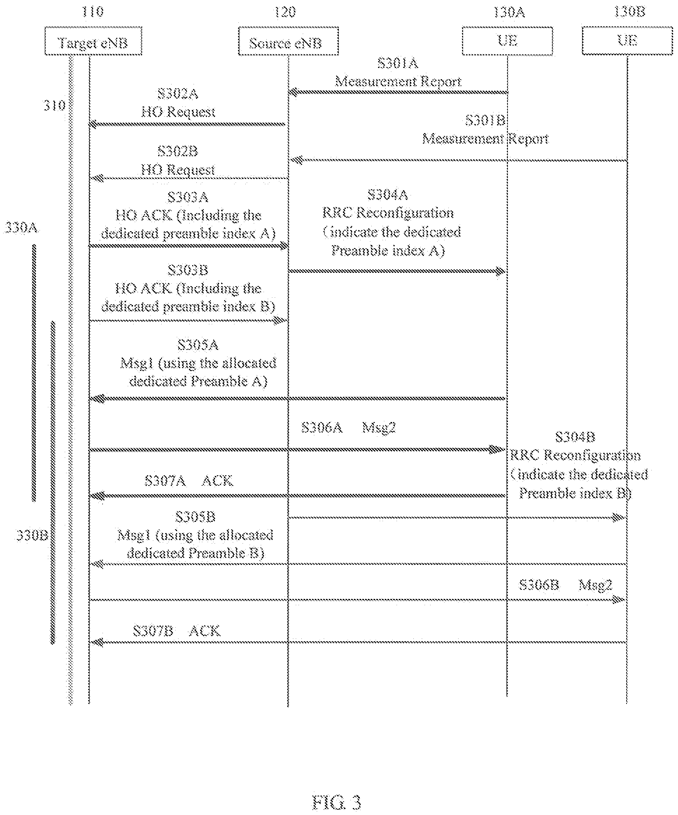

FIG. 3 illustrates an exemplary handover process for a UE from a source eNB to a target eNB according to embodiments of the present disclosure, in order to illustrate the time period for the target BS to detect the specific dedicated preamble in addition to the original 64 preambles. FIG. 3 shows two UEs 130A and 130B in handover, and both of the handovers are successful.

The signaling flow between the target eNB 110, the source eNB 120, the UE 130A or 130B is similar to those illustrated in FIG. 1, and the detailed description thereof is omitted here. The difference is that the *RRCConnectionReconfiguration* message as generated by the target eNB 110 and sent in step S303A, S303B, will not indicate the true RACH configuration in the target cell, but inform a different fake RACH configuration at least with a different root sequence. Assume the dedicated preamble allocated to the UE 130A is indexed with A, and the dedicated preamble allocated to the UE 130B is indexed with B.

As illustrated in FIG. 3 through vertical lines by the side of the target eNB 110, the line 310 indicates the time period for the target eNB 110 to detect its original or preconfigured preambles. The line 330A indicates the time period for the target eNB 110 to detect the dedicated preamble indexed A allocated to the UE 130A, which begins after the target eNB 110 sends out the HO ACK at step S303A, and ends after the target eNB 110 confirms that the UE 130A is informed that the dedicated RACH preamble has been detected by the target eNB at step S307A. The line 330B indicates the time period for the target eNB 110 to detect the dedicated preamble indexed B allocated to the UE 130B, which begins after the target eNB 110 sends out the HO ACK at step S303B, and ends after the target eNB 110 confirms that the UE 130B is informed that the dedicated RACH preamble has been detected by the target eNB at step S307B.

It can be seen that, the cell will always detect the preambles in the frequency and time domains according to the RACH configuration broadcasted through the SIB message. Only when the cell acts as a target cell and allocates one specific dedicated preamble to the UE in handover, this target eNB needs to start detecting this specific dedicated preamble with the specific root sequence, and the target eNB could stop detecting after confirming that the UE is informed that the dedicated RACH preamble has been detected by the target BS, i.e., the UE has assessed to the target eNB. Then, the target eNB could release this allocated dedicated preamble and make it available for next UEs in handover.

Another situation is HO failure where the UE fails to attach to the target cell.

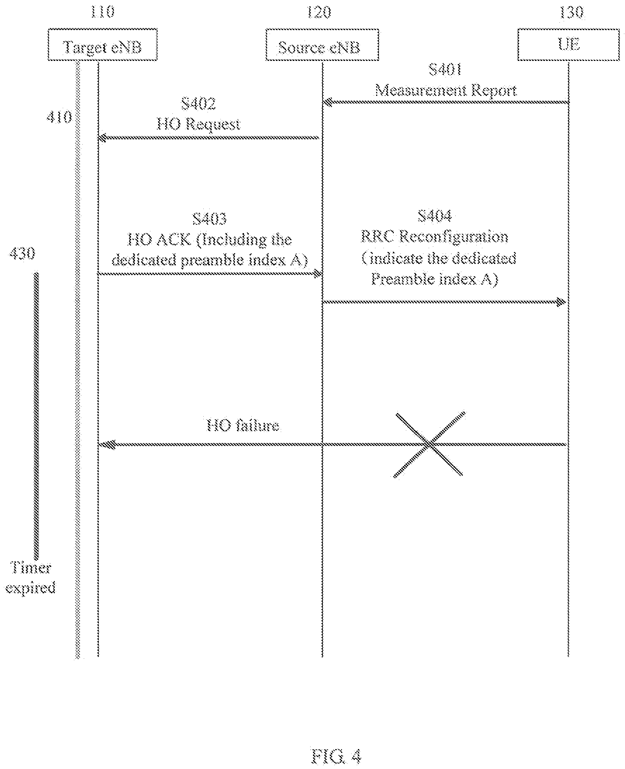

FIG. 4 illustrates an exemplary handover process for a UE from a source eNB to a target eNB according to embodiments of the present disclosure, in order to illustrate the time period for the target BS to detect the specific dedicated preamble in addition to the original 64 preambles in case of a HO failure. FIG. 4 shows one UE 130 in handover and its handover fails.

The signaling flow between the target eNB 110, the source eNB 120, the UE 130 is similar to those illustrated in FIG. 1. The difference is that the *RRCConnectionReconfiguration* message as generated by the target eNB 110 and sent in step S303A, S303B, will not indicate the true RACH configuration in the target cell, but inform a different fake RACH configuration at least with a different root sequence.

As illustrated in FIG. 4 through vertical lines by the side of the target eNB 110, the line 410 indicates the time period for the target eNB 110 to detect its original or preconfigured preambles. The line 430 indicates the time period for the target eNB 110 to detect the dedicated preamble allocated to the UE 130, which begins after the target eNB 110 sends out the HO ACK at step S403, and ends after the timer expiries because of the HO failure. The timer is configurable. In one example, the timer can be set as 200ms.

From FIGs. 3 and 4, it shows that not too much burden is added on the target eNB for detecting the additional allocated dedicated preambles.

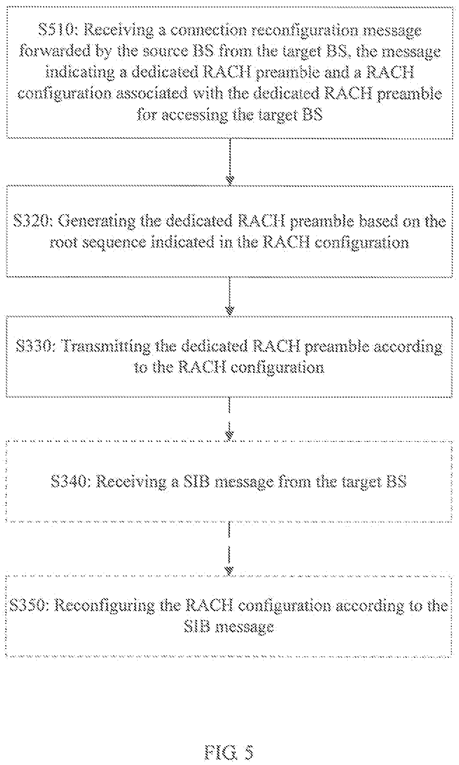

FIG. 5 illustrates an exemplary process flow of a method in a UE for a handover using dedicated random access resources according to embodiments of the present disclosure.

As shown, at step S510, the UE receives a connection reconfiguration message forwarded by its source BS from its target BS. The message, e.g. an *RRCConnectionReconfiguration* message including the *mobilityControlInformation,* indicates a dedicated RACH preamble and a RACH configuration associated with the dedicated RACH preamble for the UE to access the target BS. As described previously, the dedicated RACH preamble is different from any RACH preamble preconfigured in the target BS at least in terms of a root sequence in the RACH configuration.

After receiving the RRC message, at step S520, the UE generates the dedicated RACH preamble based on the root sequence as indicated in the received RACH configuration. It can be noted that, when the UE is in the source cell, the UE has no idea of the RACH configuration of the target cell, it will completely follow the RRCReconfiguration::MobilityControl IE indication and assume that this is the RACH configuration in the target cell.

Then, at step S530, the UE transmits the dedicated RACH preamble (e.g., MSG1) according to the received RACH configuration. In other words, once the UE has done the preparation to access to the target cell, including the downlink synchronization etc., the UE will use the configured dedicated preamble to do random access to the target cell under the RACH configuration informed in the *RRCConnectionReconfiguration* message.

Optionally, after handing over to the target BS, i.e., successful handover to the target BS, the UE would receive a SIB message from target BS at step S540.

Upon acquiring the concerned system information, at step S550, the UE will reconfigure the RACH configuration according to the SIB message. That is, the UE would discard the corresponding radio resource configuration information included in the *RRCConnectionReconfiguration* message previously received during handover. Thus, after the SIB message acquisition, the newly handed over UE will work like the normal UEs in the target cell and discard the previous fake RACH configuration.

From the description, it can be seen that there is no impact on the original process of the current UEs, and the UEs only need to work as informed by the messages it has received.

The above thus has described embodiments of the present disclosure. By allocating other preambles than the 64 preambles preconfigured in the target cell, almost endless preambles may be used as dedicated preambles for handover. Thus, the target cell could configure enough CBRA preambles without taking much consideration of preserving CFRA preambles for handover. Moreover, the proposed solutions will not impact any existing 3GPP standard. In addition, according to some embodiments, the target cell only needs to detect the additional allocated dedicated preambles for a limited time period, which will not burden the target cell.

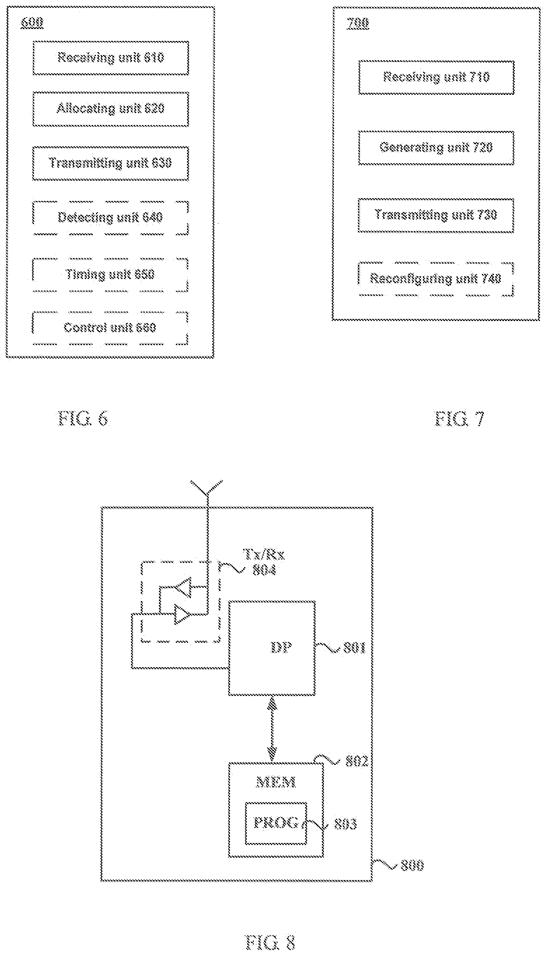

FIG. 6 is a schematic block diagram of a base station that may be configured to practice exemplary embodiments according to some embodiments of the present disclosure.

As shown in FIG. 6, the base station 600 comprises a receiving unit 610, an allocating unit 620, and a transmitting unit 630.

The receiving unit 610 is configured to receive a handover request from a source BS.

The allocating unit 620 is configured to allocate a dedicated RACH preamble and a RACH configuration associated with the dedicated RACH preamble, to the UE for accessing this BS. The dedicated RACH preamble is different from any RACH preamble preconfigured in the BS at least in terms of a root sequence in the RACH configuration. Optionally, the dedicated RACH preamble may be further different from any RACH preamble preconfigured in the BS in terms of one or more of the following: time resource for transmitting the dedicated RACH preamble, and frequency resource for transmitting the dedicated RACH preamble. The configuration of one or more of the root sequence, the time resource and the frequency resource is at least partly based on cross-correlation property of preambles, to avoid intra-cell interference with the RACH preambles preconfigured in the BS.

The transmitting unit 630 is configured to transmit a handover response including information of the dedicated RACH preamble and the RACH configuration to the source BS.

Optionally, the BS 600 could further comprise a detecting unit 640, which is configured to detect this specific dedicated RACH preamble in time resource and frequency resource for transmitting the dedicated RACH preamble, after the handover response is transmitted.

The BS could further comprise a timing unit 650, which is configured to start a timer after transmitting the handover response; and a control unit 660, which is configured to step the detecting of this specific dedicated RACH preamble after confirming that the UE is informed that the dedicated RACH preamble has been detected by the BS, or in response to expiry of the timer.

It should be understood, the units 610-660 contained in the base station 600 are configured for practicing exemplary embodiments of the present disclosure. Thus, the operations and features described above with respect to FIG. 2 also apply to the apparatus 600 and the units therein, and the detailed description thereof is omitted here.

FIG. 7 is a schematic block diagram of a UE that may be configured to practice exemplary embodiments according to some embodiments of the present disclosure.

As shown in FIG. 7, the UE 700 comprises a receiving unit 710, a generating unit 720, and a transmitting unit 730.

The receiving unit 710 is configured to receive a connection reconfiguration message forwarded by its source BS from its target BS. The message indicates a dedicated RACH preamble and a RACH configuration associated with the dedicated RACH preamble for accessing the target BS. The dedicated RACH preamble is different from any RACH preamble preconfigured in the target BS at least in terms of a root sequence in the RACH configuration.

The generating unit 720 is configured to generate the dedicated RACH preamble based on the root sequence as indicated in the received RACH configuration.

The transmitting unit 730 is configured to transmit the dedicate RACH preamble according to the received RACH configuration.

The receiving unit 710 may be further configured to receive a SIB message from the target BS after successful handover to the target BS.

The UE 700 may further comprise a reconfiguring unit 740, which is configured to reconfigure the RACH configuration according to the SIB message, upon acquiring the concerned system information.

It should be understood, the units 710-740 contained in the UE 700 are configured for practicing exemplary embodiments of the present disclosure. Thus, the operations and features described above with respect to FIG. 5 also apply to the apparatus 700 and the units therein, and the detailed description thereof is omitted here.

FIG. 8 illustrates a simplified block diagram of an entity 800 that is suitable for use in practicing exemplary embodiments of the present disclosure. The entity 800 may be an entity at the network side, for example, a base station, or an entity at the user side, e.g., a user equipment.

As shown in FIG. 8, the entity 800 includes a data processor (DP) 801, a memory (MEM) 802 coupled to the DP 801, and a suitable RF transmitter TX and receiver RX 804 coupled to the DP 801. The MEM 802 stores a program (PROG) 803. The TX/RX 804 is for bidirectional wireless communications. Note that the TX/RX 804 has at least one antenna to facilitate communication, though in practice a BS or a UE may have several ones. The entity 800 may be coupled via a data path to one or more external networks or systems, such as the internet, for example.

The PROG 803 is assumed to include program instructions that, when executed by the associated DP 801, enable the entity 800 to operate in accordance with the exemplary embodiments of this disclosure, as discussed herein with the methods in FIGs. 2 and 5. For example, the PROG 803 and the DP 801 may embody the allocating unit 620, the detecting unit 640, the timing unit 650, and the control unit 660 to perform the respective functions in a base station. Alternatively, the PROG 803 and the DP 801 may embody the generating unit 720 and the reconfiguring unit 740 to perform the respective functions in a UE.

The embodiments of the present disclosure may be implemented by computer software executable by the DP 801 of the entity 800, or by hardware, or by a combination of software and hardware.

The MEM 802 may be of any type suitable to the local technical environment and may be implemented using any suitable data storage technology, such as semiconductor based memory devices, magnetic memory devices and systems, optical memory devices and systems, fixed memory and removable memory, as non-limiting examples. While only one MEM is shown in the entity 800, there may be several physically distinct memory units in the entity 800. The DP 801 may be of any type suitable to the local technical environment, and may include one or more of general purpose computers, special purpose computers, microprocessors, digital signal processors (DSPs) and processors based on multicore processor architecture, as non limiting examples. The entity 800 may have multiple processors, such as for example an application specific integrated circuit chip that is slaved in time to a clock which synchronizes the main processor.

Thus, the present disclosure provides a BS of a cellular radio system, which is adapted to act as a target BS during a handover. The BS comprises processing means adapted to perform any method steps according to aspects of embodiments of the present disclosure. In some embodiments, the processing means of the BS is configured to perform the method steps as illustrated in FIG. 2. Also, a UE of a cellular radio system is provided. The UE comprises processing means adapted to perform any method steps according to aspects of embodiments of the present disclosure. In some embodiments, the processing means of the UE is configured to perform the method steps as illustrated in FIG. 5. In some embodiments, the processing means comprises at least a processor and at least a memory, the memory containing instructions executable by the processor.

Exemplary embodiments of the present disclosure have been described above with reference to block diagrams and flowchart illustrations of methods, apparatuses (i.e., systems). It will be understood that each block of the block diagrams and flowchart illustrations, and combinations of blocks in the block diagrams and flowchart illustrations, respectively, can be implemented by various means including computer program instructions. These computer program instructions may be loaded onto a general purpose computer, special purpose computer, or other programmable data processing apparatus to produce a machine, such that the instructions which execute on the computer or other programmable data processing apparatus create means for implementing the functions specified in the flowchart block or blocks.

The foregoing computer program instructions can be, for example, sub-routines and/or functions. A computer program product in one embodiment of the disclosure comprises at least one computer readable storage medium, on which the foregoing computer program instructions are stored. The computer readable storage medium can be, for example, an optical compact disk or an electronic memory device like a RAM (random access memory) or a ROM (read only memory).

While this specification contains many specific implementation details, these should not be construed as limitations on the scope of any implementation or of what may be claimed, but rather as descriptions of features that may be specific to particular embodiments of particular implementations. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

It should also be noted that the above described embodiments are given for describing rather than limiting the disclosure. The protection scope of the disclosure is defined by the accompanying claims. In addition, any of the reference numerals in the claims should not be interpreted as a limitation to the claims. Use of the verb "comprise" and its conjugations does not exclude the presence of elements or steps other than those stated in a claim. The indefinite article "a" or "an" preceding an element or step does not exclude the presence of a plurality of such elements or steps.

## Claims

1. A method implemented in a target base station, BS, of a cellular radio system during a handover of a user equipment, UE, from a source BS to the target BS, the method comprising:
providing a first set of preconfigured Random Access Channel, RACH, preambles for random access;
providing a second set comprising at least one dedicated RACH preamble, wherein said dedicated RACH preamble is different from any RACH preamble preconfigured in said target BS at least in terms of a root sequence in said RACH configuration;
receiving (S210) a handover request from the source BS;
allocating (S220) a dedicated random access channel, RACH, preamble from the second set and a RACH configuration associated with the dedicated RACH preamble, to the UE for accessing said target BS; and
transmitting (S230) a handover response including information of said dedicated RACH preamble and said RACH configuration to the source BS;
starting (S240) a timer after transmitting said handover response; and
stopping (S260) said detecting of the dedicated RACH preamble after confirming that said UE is informed that said dedicated RACH preamble has been detected by the target BS, or in response to expiry of said timer.

2. The method of claim 1, wherein said dedicated RACH preamble is further different from any RACH preamble preconfigured in said target BS in terms of one or more of the following:
time resource for transmitting said dedicated RACH preamble; and
frequency resource for transmitting said dedicated RACH preamble.

3. The method of any of claims 1 to 2, further comprising:
detecting (S250) said dedicated RACH preamble in time resource and frequency resource for transmitting said dedicated RACH preamble, after transmitting said handover response.

4. The method of any of claims 1 to 3, wherein allocating said dedicated RACH preamble and said RACH configuration comprises: configuring one or more of the root sequence, the time resource and the frequency resource at least partly based on cross-correlation property of preambles, to avoid intra-cell interference with the RACH preambles preconfigured in said target base station.

5. A base station, BS, of a cellular radio system, adapted to act as a target BS during a handover of a user equipment, UE, from a source BS to the target BS, the BS comprising:
a processor operative to provide a first set of preconfigured Random Access Channel, RACH, preambles for random access and to provide a second set comprising at least one dedicated RACH preamble, wherein said dedicated RACH preamble is different from any RACH preamble preconfigured in said target BS at least in terms of a root sequence in said RACH configuration;
a receiving unit (610), configured to receive a handover request from the source BS;
an allocating unit (620), configured to allocate a dedicated random access channel, RACH, preamble from the second set and a RACH configuration associated with said dedicated RACH preamble, to the UE for accessing said BS;
a transmitting unit (630), configured to transmit a handover response including information of said dedicated RACH preamble and said RACH configuration to the source BS;
a timing unit (650), configured to start a timer after transmitting said handover response; and
a control unit (660), configured to stop said detecting of the dedicated RACH preamble after confirming that said UE is informed that said dedicated RACH preamble has been detected by the target BS, or in response to expiry of said timer.

6. The base station of claim 5, wherein said dedicated RACH preamble is further different from any RACH preamble preconfigured in said BS in terms of one or more of the following:
time resource for transmitting said dedicated RACH preamble; and
frequency resource for transmitting said dedicated RACH preamble.

7. The base station of any of claims 5-6, further comprising:
a detecting unit (640), configured to detect said dedicated RACH preamble in time resource and frequency resource for transmitting said dedicated RACH preamble, after said handover response is transmitted.

8. The base station of any of claims 5 to 7, wherein said allocating unit (620) is configured to allocate said dedicated RACH preamble and said RACH configuration by:
configuring one or more of the root sequence, the time resource and the frequency resource at least partly based on cross-correlation property of preambles, to avoid intra-cell interference with the RACH preambles preconfigured in said target base station.

## Patentansprüche

1. Verfahren, das in einer Zielbasisstation (BS) eines zellularen Funksystems während einer Übergabe einer Benutzereinrichtung, UE, von einer Quell-BS an die Ziel-BS umgesetzt wird, wobei das Verfahren Folgendes umfasst:
Bereitstellen eines ersten Satzes von vorkonfigurierten Random Access Channel-Präambeln, RACH, für Direktzugriff;
Bereitstellen eines zweiten Satzes, der mindestens eine dedizierte RACH-Präambel umfasst, wobei die dedizierte RACH-Präambel sich von jeder beliebigen RACH-Präambel unterscheidet, die in der Ziel-BS mindestens hinsichtlich einer Wurzelsequenz in der RACH-Konfiguration vorkonfiguriert ist;
Empfangen (S210) einer Übergabeanforderung von der Quell-BS;
Zuweisen (S220) einer dedizierten Random Access Channel-Präambel, RACH, von dem zweiten Satz und einer RACH-Konfiguration, die der dedizierten RACH-Präambel zugeordnet ist, an die UE zum Zugreifen auf die Ziel-BS; und
Übertragen (S230) einer Übergabeantwort, die Informationen der dedizierten RACH-Präambel und der RACH-Konfiguration einschließt, an die Quell-BS;
Starten (S240) eines Zeitgebers nach dem Übertragen der Übergabeantwort; und
Stoppen (S260) des Erkennens der dedizierten RACH-Präambel nach Bestätigen, dass die UE informiert ist, dass die dedizierte RACH-Präambel durch die Ziel-BS erkannt worden ist, oder als Reaktion auf den Ablauf des Zeitgebers.

2. Verfahren nach Anspruch 1, wobei die dedizierte RACH-Präambel ferner von jeder beliebigen RACH-Präambel, die in der Ziel-BS vorkonfiguriert ist, hinsichtlich eines oder mehrerer der Folgenden verschieden ist:
einer Zeitressource zum Übertragen der dedizierten RACH-Präambel; und
einer Frequenzressource zum Übertragen der dedizierten RACH-Präambel.

3. Verfahren nach einem der Ansprüche 1 bis 2, das ferner Folgendes umfasst:
Erkennen (S250) der dedizierten RACH-Präambel in der Zeitressource und Frequenzressource zum Übertragen der dedizierten RACH-Präambel nach dem Übertragen der Übergabeantwort.

4. Verfahren nach einem der Ansprüche 1 bis 3, wobei das Zuweisen der dedizierten RACH-Präambel und der RACH-Konfiguration Folgendes umfasst: Konfigurieren einer oder mehrerer von der Wurzelsequenz, der Zeitressource und der Frequenzressource, mindestens teilweise auf Grundlage der Kreuzkorrelationseigenschaft von Präambeln, um Intrazelleninterferenz mit den in der Zielbasisstation vorkonfigurierten RACH-Präambeln zu vermeiden.

5. Basisstation, BS, eines zellularen Funksystems, die angepasst ist, um als eine Ziel-BS während einer Übergabe einer Benutzereinrichtung, UE, von einer Quell-BS zu der Ziel-BS zu agieren, wobei die BS Folgendes umfasst:
einen Prozessor, der wirksam ist, um einen ersten Satz von vorkonfigurierten Random Access Channel-Präambeln, RACH, für einen Direktzugriff bereitzustellen und um einen zweiten Satz bereitzustellen, der mindestens eine dedizierte RACH-Präambel umfasst, wobei die dedizierte RACH-Präambel sich von jeder beliebigen RACH-Präambel unterscheidet, die in der Ziel-BS mindestens hinsichtlich einer Wurzelsequenz in der RACH-Konfiguration vorkonfiguriert ist;
eine Empfangseinheit (610), die konfiguriert ist, um eine Übergabeanforderung von der Quell-BS zu empfangen;
eine Zuordnungseinheit (620), die konfiguriert ist, um eine dedizierte Random Access Channel-Präambel, RACH, von dem zweiten Satz und einer RACH-Konfiguration, die der dedizierten RACH-Präambel zugeordnet ist, an die UE zum Zugreifen auf die Ziel-BS zuzuweisen;
eine Übertragungseinheit (630), die konfiguriert ist, um eine Übergabeantwort einschließlich Informationen der dedizierten RACH-Präambel und der RACH-Konfiguration an die Quell-BS zu übertragen;
eine Zeitsteuereinheit (650), die konfiguriert ist, um einen Zeitgeber nach dem Übertragen der Übergabeantwort zu starten; und
eine Steuereinheit (660), die konfiguriert ist, um das Erkennen der dedizierten RACH-Präambel nach dem Bestätigen, dass die UE darüber informiert wurde, dass die dedizierte RACH-Präambel durch die Ziel-BS erkannt worden ist, oder als Reaktion auf den Ablauf des Zeitgebers zu stoppen.

6. Basisstation nach Anspruch 5, wobei die dedizierte RACH-Präambel ferner von jeder beliebigen RACH-Präambel, die in der BS vorkonfiguriert ist, hinsichtlich eines oder mehrerer der Folgenden verschieden ist:
einer Zeitressource zum Übertragen der dedizierten RACH-Präambel; und
einer Frequenzressource zum Übertragen der dedizierten RACH-Präambel.

7. Basisstation nach einem der Ansprüche 5 bis 6, die ferner Folgendes umfasst:
eine Erkennungseinheit (640), die konfiguriert ist, um die dedizierte RACH-Präambel in einer Zeitressource und einer Frequenzressource zum Übertragen der dedizierten RACH-Präambel nach dem Übertragen der Übergabeantwort zu erkennen.

8. Basisstation nach einem der Ansprüche 5 bis 7, wobei die Zuordnungseinheit (620) konfiguriert ist, um die dedizierte RACH-Präambel und die RACH-Konfiguration zuzuordnen durch:
Konfigurieren einer oder mehrerer von der Wurzelsequenz, der Zeitressource und der Frequenzressource, mindestens teilweise auf Grundlage der Kreuzkorrelationseigenschaft von Präambeln, um Intrazelleninterferenz mit den in der Zielbasisstation vorkonfigurierten RACH-Präambeln zu vermeiden.

## Revendications

1. Procédé implémenté dans une station de base, BS, cible d'un système radio cellulaire pendant un transfert d'un équipement utilisateur, UE, depuis une BS source à la BS cible, le procédé comprenant :
la fourniture d'un premier ensemble de préambules de canal d'accès aléatoire, RACH, préconfigurés pour un accès aléatoire ;
la fourniture d'un deuxième ensemble comprenant au moins un préambule RACH dédié, dans lequel ledit préambule RACH dédié est différent de n'importe quel préambule RACH préconfiguré dans ladite BS cible au moins en termes d'une séquence de racine dans ladite configuration RACH ;
la réception (S210) d'une demande de transfert depuis la BS source ;
l'allocation (S220) d'un préambule de canal d'accès aléatoire, RACH, dédié depuis le deuxième ensemble et d'une configuration RACH associée au préambule RACH dédié, à l'UE pour accéder à ladite BS cible ; et
la transmission (S230) d'une réponse de transfert incluant des informations dudit préambule RACH dédié et de ladite configuration RACH à la BS source ;
le démarrage (S240) d'un temporisateur après transmission de ladite réponse de transfert ; et
l'arrêt (S260) de ladite détection du préambule RACH dédié après confirmation que ledit UE est informé que ledit préambule RACH dédié a été détecté par la BS cible, ou en réponse à une expiration dudit temporisateur.

2. Procédé selon la revendication 1, dans lequel ledit préambule RACH dédié est en outre différent de n'importe quel préambule RACH préconfiguré dans ladite BS cible en termes d'un ou plusieurs des éléments suivants :
une ressource de temps pour transmettre ledit préambule RACH dédié ; et
une ressource de fréquence pour transmettre ledit préambule RACH dédié.

3. Procédé selon l'une quelconque des revendications 1 à 2, comprenant en outre :
la détection (S250) dudit préambule RACH dédié dans une ressource de temps et une ressource de fréquence pour transmettre ledit préambule RACH dédié, après transmission de ladite réponse de transfert.

4. Procédé selon l'une quelconque des revendications 1 à 3, dans lequel l'allocation dudit préambule RACH dédié et de ladite configuration RACH comprend : la configuration d'une ou plusieurs parmi la séquence de racine, la ressource de temps et la ressource de fréquence au moins partiellement sur la base d'une propriété de corrélation croisée de préambules, afin d'éviter une interférence intra-cellulaire avec les préambules RACH préconfigurés dans ladite station de base cible.

5. Station de base, BS, d'un système radio cellulaire, conçu pour jouer le rôle de BS cible pendant un transfert d'un équipement utilisateur, UE, depuis une BS source à la BS cible, la BS comprenant :
un processeur opérationnel pour fournir un premier ensemble de préambules de canal d'accès aléatoire, RACH, préconfigurés pour un accès aléatoire et pour fournir un deuxième ensemble comprenant au moins un préambule RACH dédié, dans lequel ledit préambule RACH dédié est différent de n'importe quel préambule RACH préconfiguré dans ladite BS cible au moins en termes d'une séquence de racine dans ladite configuration RACH ;
une unité de réception (610), configurée pour recevoir une demande de transfert depuis la BS source ;
une unité d'allocation (620), configurée pour allouer un préambule de canal d'accès aléatoire, RACH, dédié depuis le deuxième ensemble et une configuration RACH associée audit préambule RACH dédié, à l'UE pour accéder à ladite BS ;
une unité de transmission (630), configurée pour transmettre une réponse de transfert incluant une information dudit préambule RACH dédié et de ladite configuration RACH à la BS source ;
une unité de temporisation (650), configurée pour démarrer un temporisateur après transmission de ladite réponse de transfert ; et
une unité de commande (660), configurée pour arrêter ladite détection du préambule RACH dédié après confirmation que ledit UE est informé que ledit préambule RACH dédié a été détecté par la BS cible, ou en réponse à une expiration dudit temporisateur.

6. Station de base selon la revendication 5, dans laquelle ledit préambule RACH dédié est en outre différent de n'importe quel préambule RACH préconfiguré dans ladite BS en termes d'un ou plusieurs des éléments suivants :
une ressource de temps pour transmettre ledit préambule RACH dédié ; et
une ressource de fréquence pour transmettre ledit préambule RACH dédié.

7. Station de base selon l'une quelconque des revendications 5 ou 6, comprenant en outre :
une unité de détection (640), configurée pour détecter ledit préambule RACH dédié dans une ressource de temps et une ressource de fréquence pour transmettre ledit préambule RACH dédié, après que ladite réponse de transfert est transmise.

8. Station de base selon l'une quelconque des revendications 5 à 7, dans laquelle ladite unité d'allocation (620) est configurée pour allouer ledit préambule RACH dédié et ladite configuration RACH en :
configurant une ou plusieurs parmi la séquence de racine, la ressource de temps et la ressource de fréquence au moins partiellement sur la base d'une propriété de corrélation croisée de préambules, afin d'éviter une interférence intra-cellulaire avec les préambules RACH préconfigurés dans ladite station de base cible.
